# EUROPEAN PATENT APPLICATION

(11) **EP 3 156 223 A1**
(43) Date of publication of application: **19.04.2017**
(21) Application number: 15190126.1
(22) Date of filing: 16.10.2015
(51) Int. Cl.: B32B 9/04, B32B 7/00, B32B 7/10, B32B 7/12, B32B 9/00, B32B 27/00, B32B 27/06, B32B 27/08, B32B 27/18, B32B 27/22, B32B 27/28, B32B 27/30, B32B 27/36, B32B 3/00, B32B 3/06, B32B 3/16, B32B 3/30

(54) **DECORATIVE MULTI-LAYER SURFACE COVERING COMPRISING POLYVINYL BUTYRAL**

(71) Applicant: Tarkett GDL, 9779 Lentzweiler (LU)
(72) Inventor: PAILLER, Frédéric, 9559 Wiltz (LU); BASTIN, Pierre, 9559 Wiltz (LU); LOCKMAN, Joël, 9559 Wiltz (LU)
(74) Representative: Pronovem

(57) **Abstract**

The present invention is related to decorative multi-layer surface coverings comprising a printed layer, wherein said printed layer comprises a polymer blend, said polymer blend comprising polyvinyl butyral and polylactic acid.

## Description

### Field of the Invention

The present invention is related to decorative multi-layer surface coverings comprising a printed layer, said printed layer comprising polyvinyl butyral, polylactic acid and one or more (meth)acrylate comprising polymer(s) and/or vinyl alkanoate comprising polymer(s).

The invention is further related to a method for the production of said surface coverings.

### State of the Art

Synthetic flooring has gained widespread commercial acceptance and is made from various flooring compositions which may comprise all sorts of resins or mixtures of resins.

Flooring materials have to fulfil several technical criteria such as, for example, abrasion and scuff resistance, stain resistance, a good balance between hardness and flexibility, compatibility with additional adjuvants such as, for example, plasticizers, fillers, UV-stabilizers, pigments and colouring agents, flame retardants and antistatic agents, the possibility of its easily industrially processing, and an economically attractive raw materials cost.

While floorings such as tiles are frequently made as a mono-layer, multi-layer executions compositions exhibiting different in-use properties, can also be used.

A typical multi-layer flooring can contain, for example, seen from the bottom to the top, a core layer, a coloured and/or printed interface layer, a transparent wear layer and possibly an extra top-wear layer of polyurethane or poly(meth)acrylates. This flooring can optionally be combined with a form stabilizing element such as, for example a glass fiber mat and a backing layer.

A major component of many current synthetic flooring compositions is polyvinyl chloride (PVC) which can be applied in various forms such as, e.g. plasticized PVC and PVC foam. As a matter of fact, PVC is virtually the sole polymer which is widely used in flooring materials.

For environmental and other reasons, there is an on-going effort to develop adequate resin compositions for flooring with a substantially reduced chlorine content.

The ecological concerns related to the PVC decorative covering segment pertain to recyclability or energy recovery, volatile organic content levels, and the use of heavy metal stabilizers.

The hydrogen chloride and heavy metal ash from decomposition of the heavy metal stabilizers are undesired consequences from the incineration of scrap associated with manufacturing and installation of PVC-based covering materials.

Consequently, even though PVC offers an excellent mechanical, acoustic and heat insulation compromise in its application to floor coverings, the manufacturers of these coverings have been looking for a substitute for it, providing an answer to the following three points of concern:
- releasing no toxic gas when burnt, such as chlorine, hydrochloric acid, sulfur dioxide or nitrogen oxides;
- having properties, especially mechanical properties and fire resistance, of the same order as those obtained today with PVC;
- being capable of processing or fabrication on existing equipment, especially by extrusion, calendering, and the like.

In recent years, PVC-free floor and wall coverings materials have become popular and already have been subject of a considerable number of patents such as for example EP 0257796 (B1), EP 0742098 (B1), EP 0850272 (B1), EP1611201 (B1), US 4,379,190, US 4,403,007, US 4,438,228, US 5,409,986, US 6,214,924, US 6,187,424, US 2011/0305886, JP 2004168860, JP 2002276141, JPH 07125145, JPH 06128402, JP 2000063732, JPH 1148416, JP 2000045187, JPH 0932258, JPS 6092342 and JPH 09302903.

In light of the growing environmental awareness, it is advantageous to have a maximum of recycled "difficult biodegradable" polymers, such as polyvinyl butyral (PVB) and/or ecologically friendly "green" materials , such as polylactic acid (PLA) as raw material(s) for flooring applications providing the flooring with desirable physical and mechanical properties.

PLA (polylactic acid) has been one of the most commercially successful bioplastics and its introduction into floor and wall coverings already is subject to a number of patents.

US 2005/0136259 relates to polylactide-based products and more particularly to durable tile or sheet form floor coverings made of one or more layers of polymers suitable for e.g. pedestrian traffic in domestic and/or other situations over an extended period of time.

US 2010/0015420 relates to a biolaminate composite assembly, including one or more biolaminate layers, a non-plastic rigid substrate and an adhesive layer in contact with the substrate and the one or more biolaminate layers. Biolaminate refers to one or more thin layers including materials that are derived from natural or biological components such as polylactic acid in combination with optional additives, colorants, fillers, reinforcements, minerals, and other inputs.

US 2013/004751 discloses a flooring material using polylactic acid resin comprising a base layer, a print layer which is formed on top of the base layer, and has a print pattern on an upper side thereof and a transparent layer which is formed on top of the print layer, wherein one or more of the base layer, the print layer, and the transparent layer include polylactic acid resin.

EP 1361039 B1 discloses polymeric materials and products prepared from the polymeric materials including a polylactic acid-based polymer in combination with plasticizer and a compatibilizer, and optionally include a filler. The polymeric material can include between about 30 to about 50 percent by weight polyvinyl chloride, polyethylene glycol, polyglycolide, ethylene vinyl acetate, polycarbonate, polycaprolactone, polyhydroxyalkanoates and polyolefins modified with polar groups such as an ionomer. The plasticizer is typically an epoxidized vegetable oil or esterified and epoxidized vegetable oil and is typically present in an amount of between about 10 and about 50% by weight. The compatibilizer comprising a polyolefin modified with one or more polar functional groups, is typically present in an amount of between about 5 and about 10% by weight. The material can be used in decorative surface coverings, such as a floor coverings, particularly when it is in the form of a polymeric sheet.

WO 2007/089451 and WO 2009/045564 relate to a blend of one or more biodegradable polymers with one or more acrylic copolymers, in an amount of from 0.1 to 15% by weight, for the purpose of improving good metal release properties as well as other improved properties, such as melt strength, of said one or more biodegradable polymer(s). One problem, for instance with polylactide is its poor melt strength leading to difficulties in subsequent melt processing.

WO 92/04412 relates to films of blends of polyhydroxy acid polymer, such as polylactic acid, and other compatible thermoplastic polymers characterized as having a sufficient number and distribution of hydrophilic groups, such as copolyetheresters, ethylene vinyl alcohol comprising copolymers and polyolefins, and their production by melt processing.

Polyvinyl butyral (PVB) sheet is widely used as a clear, transparent, shock-absorbing interlayer in laminated safety glazings for motor vehicle, aircraft, architectural, security and like applications.

The glass from these safety glasses can be recovered by conventional techniques such as grinding, crushing, and milling the scrap glass to recover the glass cullet to the glass manufacturer, while the PVB is disposed of in landfills or incinerators.

Considering the abundant amount of post-consumer PVB available, appropriate recycling possibilities such as its use in the production of shaped articles, such as surface coverings, already have been examined.

EP 1084188 B1 discloses a composition comprising a) 5 to 95 parts by weight of polyvinyl chloride and b) 95 to 5 parts by weight of either virgin or recycled/recovered polyvinyl butyral per 100 parts by weight of said polyvinyl chloride and said polyvinyl butyral combined; and c) 1 to 50 parts by weight of a high-molecular weight solid ethylene-containing plasticizer per 100 parts by weight of said polyvinyl chloride, said polyvinyl butyral and said ethylene-containing plasticizer combined.

US 2,552,600 discloses floor and wall coverings composed of a flexible, alkali-resistant decorative wear layer including a binder comprising plasticized polyvinyl butyral and a heat convertible phenolic resin.

EP 0471658 B1 discloses a flooring composition comprising plasticized polyvinyl butyral resin recovered from laminated safety glass, containing minute glass particles in an amount up to 10 % by weight, in a resin mixture comprising 95 to 25 % by weight of recovered plasticized PVB and 5 to 75% by weight of another compatible resin including homopolymers and copolymers such as for example polyvinyl butyral, polyvinyl chloride, polyvinyl acetate, polyethylvinyl acetate, polyvinyl formal, nitrile butadiene rubber and the like.

EP 0419438 B1 discloses a sheet formed of a polyblend comprising, on a weight basis, a) 30 to 90% polyvinyl butyral containing about 11 to 30% hydroxyl groups and b) 70 to 10% thermoplastic polyurethane.

EP 0853097 discloses a polymer composition, suitable for resilient flooring, comprising polyvinyl butyral and a polymer which contains a polar moiety which is effective to form a hydrogen bond with the polyvinyl butyral, wherein the polymer having the polar moiety is present at an amount in the range of from about 3 to about 25% by weight based on the weight of the polyvinyl butyral and the polymer having the polar moiety combined, wherein further the composition is sufficiently non-sticking that it can be extruded and calendered without substantial adherence to hot metal parts. The polymer having the polar moiety is selected from the group consisting of polyethylene methacrylic acid, the partial metal salt of polyethylene methacrylic acid, polyethylene acrylic acid, polyethylene vinyl acetate, polyamide, polyamine, a thermoplastic polyurethane, polyvinyl alcohol, polyethylene carbon monoxide and mixtures thereof.

Substituting PVC by "green" and/or recycled alternatives in general necessitates to accept compromises regarding to the technical performances of the derived decorative surface coverings.

Polylactid acid, for example, suffers from hydrolytic instability, an insufficient alcohol- and stain resistance and furthermore is characterized by a too low melt-viscosity for trouble-free calendering.

Polyvinyl butyral suffers from insufficient alcohol resistance and an adequate rigidity. Moreover, recycled polyvinyl butyral in general comprises a significant amount of plasticizer what limits its adherence to non-glass surfaces as is the case in multi-layer decorative surface coverings and generally results in a deterioration of certain desirable laminate properties.

Furthermore compositions comprising polyvinyl butyral tend to stick to hot metal parts and either cause problems in processing such as cacking and build-up of polymer on the metal, or are so prone to sticking to metal that such materials cannot be processed at all.

### Aims of the invention.

The present invention aims to provide decorative floor and wall coverings, comprising biobased and/or recycled polymers, that do not present the drawbacks of the state of the art decorative surface coverings comprising green and/or recycled polymers.

The present invention aims to provide a multi-layer decorative surface covering comprising a printed layer said printed layer comprising recycled and/or biobased polymers and being characterized by an outstanding adherence to the layers contacting it, said layers comprising biobased and/or recycled polymers; said multi-layer decorative surface covering being prepared by means of a conventional process.

The present invention also aims to provide a multi-layer decorative surface covering comprising a printed layer said printed layer comprising recycled and/or biobased polymers and a showing satisfying compatibility to the printing inks, conventionally used.

Moreover, the present invention aims providing a multi-layer decorative surface covering comprising a printed layer comprising biobased plasticizers.

The present invention further aims to provide said multi-layer decorative surface coverings using conventional processing equipment and processing conditions, said surface coverings answering technical criteria, similar to the existing PVC alternatives.

### Summary of the invention.

The present invention discloses a decorative multi-layer surface covering comprising a printed layer, said printed layer comprising a polymer blend, said polymer blend comprising:
- from 30 to 90% by weight, preferably from 35 to 85% by weight, more preferably from 40 to 80% by weight of polylactic acid (i) or a mixture of polylactic acid and one or more vinyl alkanoate comprising polymer(s) (ii), or a mixture of polylactic acid and one or more (meth)acrylate comprising polymer(s) (iii), or a mixture of polylactic acid and one or more vinyl alkanoate comprising polymer(s) and one or more (meth)acrylate comprising polymer(s), wherein said mixtures comprise at least 5% by weight of polylactic acid;
- from 10 to 70% by weight, preferably from 15 to 65% by weight, more preferably from 20 to 60% by weight of polyvinyl butyral (iv) or a mixture of polyvinyl butyral and one or more vinyl alkanoate comprising polymer(s) (ii), or a mixture of polyvinyl butyral and one or more (meth)acrylate comprising polymer(s) (iii), or a mixture of polyvinyl butyral and one or more vinyl alkanoate comprising polymer(s) and one or more (meth)acrylate comprising polymer(s), wherein said mixtures comprise at least 5% by weight of polyvinyl butyral;
wherein the total amount of polymer in the polymer blend represents 100% by weight.

Preferred embodiments of the present invention disclose one or more of the following features:
- the polyvinyl butyral is recycled polyvinyl butyral;
- the polyvinyl butyral is recycled polyvinyl butyral comprising from about 5 to about 50% by weight, of one or more plasticizers selected from the group consisting of alkyl esters of polyethylene glycol, dialkyl esters of aliphatic dicarboxylic acid, alkyl-aryl of aliphatic dicarboxylic acids, alkyl esters of aromatic mono-, di-, tri-, or tetra-carboxylic acids, alkyl-aryl esters of aromatic di-, tri-, or tetra-carboxylic acids, phosphate esters and ricinoleates;
- the one or more vinyl alkanoate comprising polymers (ii) are selected from the group consisting of:
   - (ii.a) the vinyl alkanoate homo- or copolymers comprising 60% by weight or more, preferably 70% or more, more preferably 80% or more, most preferably 90% or more of vinyl acetate;
   - (ii.b) the alkene/vinyl alkanoate copolymers comprising 60% by weight or more, preferably 70% or more, more preferably 80% or more, most preferably 85% or more of vinyl alkanoate;
   - (ii.c) the alkene/vinyl alkanoate/carbon monoxide copolymer comprising 40 to 80% by weight of one or more alkenes, 5 to 60% by weight of one or more vinyl alkanoates and 3 to 30% by weight of carbon monoxide; and
   - mixtures of (ii.a), (ii.b) and (ii.c);
- the one or more (meth)acrylate comprising polymer(s) (iii) are selected from the group of:
   - (iii.a) the (meth)acrylate homo- or a random (co)polymer comprising at least 60% by weight, preferably at least 70% by weight, more preferably at least 80 % by weight of methyl (meth)acrylate;
   - (iii.b) the (meth)acrylate copolymer is a block copolymer comprising one or more blocks of methacrylic ester units and one or more blocks of acrylic ester units;
   - (iii.c) the alkene/(meth)acrylate copolymer comprising from 50 to 95% by weight of one or more alkenes and from 5 to 50% by weight of one or more C₁-C₈ alkyl (meth)acrylates;
   - (iii.d) alkene/ alkyl(meth)acrylate/ carbon monoxide copolymers comprising from 40 to 80% by weight of one or more alkenes and from 5 to 60% by weight of one or more C₁-C₈ alkyl (meth)acrylates and 3 to 30% by weight of carbon monoxide; and
   - mixtures of(iii.a), (iii.b), (iii.c) and (iii.d);
- the printed layer comprises from 2 to 100 parts by weight, preferably from 3 to 70 parts by weight, more preferably from 4 to 55 parts by weight and most preferably from 5 to 40 part by weight of one or more plasticizers selected from the group consisting of dialkyl esters of cyclohexane dicarboxylic acids; dialkyl esters of aliphatic dicarboxylic acids; alkyl esters of aromatic mono- di-, tri-, or tetra-carboxylic acids; lower alkyl phosphates; lower alkyl-aryl phosphates; alkyl sulfonates and bioplasticizers for 100 parts by weight of polymer blend;
- the printed layer comprises one or more bioplasticizers selected from the group consisting of acetylated monoglycerides, C₁-C₈ alkyl citrate, C₁-C₈ alkyl acetylcitrate and epoxidized vegetable oils;
- the printed layer is polyvinyl chloride free;
- the decorative surface covering comprises:
   - a backing layer in contact with the bottom surface of a core layer,
   - a printed layer in contact with the top surface of the core layer,
   - a wear layer in contact with the top surface of the printed layer,
   wherein at least one of said backing-, core- and wear layer comprises polylactic acid and/or polyvinyl butyral and/or (meth)acrylate comprising polymer(s) and/or vinyl alkanoate comprising polymer(s);
- at least one of the backing layer, the core layer and the wear layer is polyvinyl chloride free;
- the printed layer comprises a print on at least on side of the polymer layer of the printed layer, said print comprising one or more polymer(s) and/or oligomers selected from the group consisting of polyolefins, poly(meth)acrylics, polyesters, polyamides, polyvinyl chloride, latex, polycarbonates, polyurethanes, polyethers, alkyd resins and mixtures thereof; and one or more dyes and/or pigments;

The present invention further discloses a method for the preparation of the decorative multi-layer surface coverings comprising the steps of:
a) melt-mixing the printed layer constituents at a temperature comprised between 140 and 240°C to form a paste ;
b) converting the paste of step a) into the printed layer using a calendering process at a temperature comprised between 80 and 200°C;
c) contacting and affixing each side of the printed layer of step b) with a paste, wherein said paste comprises polylactic acid and/or polyvinyl butyral, said contacting and affixing being performed through a calendering process, at a temperature comprised between 130 and 220°C, to form a decorative multi-layer stack.

Preferred embodiments of the method for the preparation of said multi-layer decorative surface covering disclose one or more of the following features:
- the polyvinyl butyral is at least partly obtained from a recycling process;
- the method comprises the additional step of:
   - cooling down the printed layer of step b) to a temperature comprised between 25 and 60°C, preferably between 30°C and 50°C; and
   - applying at least one print on at least one surface of said printed layer;
- the method comprises the additional step of:
   - cooling down the printed layer of step b) to a temperature comprised between 25 and 60°C, preferably between 30°C and 50°C;
   - applying a primer on at least one surface of said printed layer; and
   - applying at least one print on the at least one primered surface of said printed layer;
- the at least one print is obtained from drying and/or curing an ink composition selected from the group consisting of aqueous ink compositions, radiation curable ink compositions, radiation curable aqueous ink compositions, PVC plastisols and poly(meth)acrylate plastisols.

### Detailed description of the invention.

The present invention provides a decorative multi-layer surface covering comprising a backing layer, a core layer formed on top of the backing layer, a printed layer formed on top of the core layer, said printed layer optionally having a printed pattern on its top surface and/or its bottom surface; and a transparent wear layer formed on top of the printed layer, wherein the printed layer comprises a polymer blend comprising polylactic acid (PLA) and polyvinyl butyral (PVB).

The flooring material may further include a surface treatment layer formed on top of the transparent wear layer.

The inventors have surprisingly found that the combination of PLA (i) and one or more (meth)acrylate comprising polymers(s) (iii) and/or vinyl alkanoate comprising polymers(s) (ii) increases the adhesion of the printed layer to the wear layer while PVB (iv) increases the adhesion of the printed layer to the core layer.

The inventors have found as well that the use of inks didn't decrease the adhesion of the printed layer to the wear layer. More surprisingly, traditional inks used for PVC applications confirm this effect.

Advantageously the polymer blend comprises PLA (i), PVB (iv) and one or more (meth)acrylate comprising polymer(s) (iii) and/or vinyl alkanoate comprising polymers(s) (ii).

The acrylate polymer(s) increase the melt strength of the polymer blend, thus enlarging the process capabilities, while PLA reduces its dynamic viscosity, thus reducing degradation risks.

The decorative multi-layer surface covering of the present invention further is characterized in that at least one of the layers, contacting the printed layer comprises PVB and/or PLA and/or (meth)acrylate comprising polymer(s) and/or vinyl alkanoate comprising polymers.

Preferably the printed layer is polyvinyl chloride free.

Preferably at least one of the backing layer, the core layer and the wear layer is polyvinyl chloride free; more preferably the decorative multi-layer surface covering is polyvinyl chloride free.

Polylactic acid (i) (PLA) for being used in the composition of the present invention, refers to a thermoplastic polyester derived from 2-hydroxy lactate (lactic acid) or lactide (cyclic diester). The formula of the subunit is: -[O-CH(CH₃)-CO]-

The alpha-carbon of the monomer (CH₃CH(OH)CO₂H) is optically active, said monomer being produced by a fermentation method using a sugar extracted from maize, potatoes, or the like. Polylactic acid is typically selected from the group consisting of D-polylactic acid, L-polylactic acid, D,L-polylactic acid, meso-polylactic acid, and any combination thereof.

PLA in general is classified into crystalline PLA and amorphous PLA. The amorphous character increases as the racemic content increases.

A typical PLA (i), for being used in the polymer blend of the present invention, is an amorphous resin, possibly comprising some crystallinity, and characterized by a number average molecular weight comprised between 15,000 and 300,000, preferably between 50,000 and 250,000.

The vinyl alkanoate comprising polymers (ii) for being used in the polymer blend of the printed layer of the present invention are selected from the group consisting of vinyl alkanoate homo- and copolymers (ii.a), alkene/vinyl alkanoate copolymers (ii.b), alkene/vinyl alkanoate/ carbon monoxide copolymers (ii.c) and mixtures thereof.

The vinyl alkanoate comprising homo- and copolymers (ii.a) comprise one or more vinyl alkanoate monomer(s), defined by the general formula RCOOCH=CH₂, wherein R is an alkyl radical containing from 1 to 20 carbon atoms, and are preferably selected from the group consisting of vinyl formate, vinyl acetate, vinyl propionate, vinyl butyrate, vinyl octanoate and vinyl stearate.

Preferably the vinyl alkanoate comprising copolymers (ii.a) comprise at least 60% by weight, more preferably at least 70% by weight, most preferably at least 80% by weight or even at least 90% by weight of vinyl acetate. Preferably the vinyl alkanoate polymer is polyvinyl acetate.

The alkene/vinyl alkanoate copolymers (ii.b) comprise one or more alkenes and one or more vinyl alkanoate(s) wherein the one or more alkenes are defined by the general formula R₁R₂C=CR₃R₄, wherein R₁, R₂, R₃ and R₄ independently is a hydrogen or an alkyl radical containing from 1 to 4 carbon atoms and are preferably selected from the group consisting of ethene, propene, 1-butene, 1-pentene, 1-hexene, 2-methyl-1-butene, 2,3-dimethyl-1-pentene and wherein the one or more vinyl alkanoate monomer(s) are defined as in the vinyl alkanoate homo- and copolymers (ii.a).

Preferably the alkene/vinyl alkanoate copolymer (ii.b) comprises at least 60% by weight, more preferably at least 70% by weight, most preferably at least 80% by weight or even at least 85% by weight of one or more vinyl alkanoate(s) and 40% or less, preferably 30% or less, more preferably 20% or less, most preferably 15% or less of one or more 1-alkene(s).

Preferably the alkene/vinyl alkanoate copolymer (ii.b) is an ethylene/vinyl acetate copolymer comprising at least 60% by weight, preferably at least 70% by weight, more preferably at least 80% by weight, most preferably at least 85% by weight of vinyl acetate.

The alkene/vinyl alkanoate/ carbon monoxide copolymers (ii.c) comprise 40 to 80% by weight of one or more alkenes, 5 to 60% by weight of one or more vinyl alkanoates and 3 to 30% by weight of carbon monoxide, wherein the one or more alkenes and the one or more vinyl alkanoates are defined as in the alkene/vinyl alkanoate copolymers (ii.b).

Preferably the alkene/vinyl alkanoate/ carbon monoxide copolymer (ii.c) is an ethylene/vinyl acetate/carbon monoxide copolymer.

(Meth)acrylate comprising polymers(s) (iii) for being used in the polymer blend of the printed layer of the present invention are selected from the group consisting of alkyl(meth)acrylate homo- and random copolymers (iii.a); alkyl(meth)acrylate block copolymers (iii.b); alkene/ alkyl(meth)acrylate copolymers (iii.c); alkene/ alkyl(meth)acrylate/ carbon monoxide copolymers (iii.d) and mixtures thereof.

The alkyl(meth)acrylate (co)polymers (iii.a) comprise homopolymers of methyl methacrylate, and/or random copolymers of methyl methacrylate and C₁ to C₈ alkyl (meth)acrylate, said C₁ to C₈ alkyl (meth)acrylates being selected from the group consisting of methyl (meth)acrylate, ethyl (meth)acrylate, n-propyl (meth)acrylate, n-butyl (meth)acrylate, i-butyl (meth)acrylate, n-hexyl (meth)acrylate, and 2-ethylhexyl (meth)acrylate; said copolymers containing at least 60% by weight, preferably at least 70% by weight, more preferably at least 80 parts by weight of methyl methacrylate.

Poly(methyl methacrylate) (PMMA) is preferably used.

The alkyl (meth)acrylate block copolymers (iii.b) comprise from 10 to 90% by weight, preferably from 20 to 80% by weight of one or more block(s) comprising alkyl methacrylate monomers and from 90 to 10% by weight, preferably from 80 to 20% by weight of one or more blocks comprising alkyl acrylate monomers.

Preferably the glass transition temperature (measured by Differential Scanning Calorimetry, according to ASTM D3418 with a heating gradient of 20°C per minute) of the alkyl methacrylate comprising blocks is comprised between 70 and 110°C, more preferably between 80 and 110°C and most preferably between 90 and 110 °C. The glass transition temperature of the alkyl acrylate comprising blocks is comprised between -70 and -20°C, preferably between -60 and -30°C and more preferably between -50 and -40°C.

Preferably the alkyl (meth)acrylate block copolymer (iii.b) is a di-block copolymer comprising a block comprising alkyl acrylate monomers and a block comprising alkyl methacrylate monomers such as for example a di-block copolymer comprising a block comprising n-butyl acrylate monomers and a block comprising methyl methacrylate monomers.

The alkyl (meth)acrylate copolymer (iii.b) more preferably is a tri-block copolymer comprising one block comprising alkyl acrylate monomers and two blocks comprising alkyl methacrylate monomers such as for example a tri-block copolymer comprising one block comprising n-butyl acrylate monomers and two blocks comprising methyl methacrylate monomers.

The alkene/ alkyl(meth)acrylate copolymers (iii.c) comprise from 50 to 95% by weight of one alkenes and from 5 to 50% by weight of one or more C₁-C₈ alkyl (meth)acrylates wherein the one or more alkenes are defined as in (ii.b) and wherein the C₁-C₈ alkyl (meth)acrylates are selected from the group as defined in the alkyl(meth)acrylate (co)polymers (iii.a).

Preferably the alkene/alkyl(meth)acrylate copolymer (iii.c) is an ethylene/methylacrylate or an ethylene/butylacrylate copolymer.

The alkene/ alkyl(meth)acrylate/ carbon monoxide copolymers (iii.d) for being used in the composition of the printing layer of the present invention comprise from 40 to 80% by weight of one or more alkenes and from 5 to 60% by weight of one or more C₁-C₈ alkyl (meth)acrylates and from 3 to 30% by weight of carbon monoxide wherein the one or more alkenes and the one or more C₁-C₈ alkyl (meth)acrylates are selected from the group as defined in (iii.c)

Preferably the alkene/alkyl(meth)acrylate/carbon monoxide copolymer (iii.d) is an ethylene/ethyl acrylate/carbon monoxide, an ethylene/n-butyl acrylate/carbon monoxide or an ethylene/2-ethylhexyl acrylate/ carbon monoxide copolymer.

Polyvinyl butyral (iv) (PVB) for being used in the composition of the present invention, may be virgin vinyl butyral, that is PVB which has not been used previously, but preferably is recovered or recycled, providing a lower cost but an equally high quality raw material. The kind of recovered or recycled PVB is not critical. It has been found that recovered or recycled PVB of different kinds and from different manufacturing origins, as well as mixtures of different kinds of PVB, are suitable for use in accordance to this invention. The recovered or recycled PVB can contain common additives and contaminants such as plasticizers, sand, and fine glass particles while still being acceptable for use in the decorative substrates of the present invention.

PVB is a complex resin which may be manufactured, depending upon the desired application, with large variations in respect to structural features and composition.

Polyvinyl acetals, in general, are prepared from aldehydes and polyvinyl alcohols.

Polyvinyl alcohols are high molecular weight resins containing various percentages of hydroxyl and acetate groups, produced by hydrolysis of polyvinyl acetate. The conditions of the acetal reaction and the concentration of the particular aldehyde and polyvinyl alcohol used are closely controlled to form polymers containing predetermined proportions of hydroxyl groups, acetate groups and acetal groups.

PVB resin is produced by known aqueous or solvent acetalization processes wherein polyvinyl alcohol is reacted with butyraldehyde in the presence of an acid catalyst to produce PVB, followed by neutralization of the catalyst, separation, stabilization and drying of the PVB resin.

A method for recycling of PVB is disclosed in for example US 2005/0146074, US 2009/0209667 and US 2010/0249254.

The primary differences between different types of PVB relate to differences in molecular weight, differences in the content of hydroxyl, butyral and residual ester groups, and differences in the type and content of other additives.

A typical PVB, for being used in the composition of the present invention, has a molecular weight range, according to the Staudinger equation, of from 30,000 to 600,000, preferably of from 50,000 to 400,000; a range of from 10% to 30% by weight, preferably of from 12% to 25% by weight of hydroxyl groups calculated as the polyvinyl alcohol, and a range of from 0% to 5% by weight, preferably of from 0% to 3% by weight of residual ester groups calculated as polyvinyl acetate.

Preferably, the PVB for being used in the decorative surfaces of the present invention comprises recycled PVB; more preferably the PVB for being used in the decorative surfaces of the present invention is recycled PVB.

In general recycled PVB is plasticized. The contents of the plasticizers in PVB may vary largely, for example from about 5 to about 50% by weight, in general from about 20 to about 40% by weight.

Typical plasticizers present in recycled PVB are alkyl esters of polyethylene glycol such as diethylene glycol di-2-ethylbutyrate, diethylene glycol di-n-hexoate, triethylene glycol di-2,ethylbutyrate, triethylene glycol di-n-hexoate, triethylene glycol di-2-methyl pentoate, triethylene glycol di-2-ethylhexanoate, triethylene glycol di-heptanoate, tetraethylene glycol di-2-ethylbutyrate, tetraethylene glycol di-heptanoate, tetraethylene glycol di-2-ethylhexanoate, pentaethylene glycol di-2-ethylbutyrate, dialkyl esters of aliphatic dicarboxylic acid such as dibutyl adipate, di-n-pentyl adipate, di-n-hexyl adipate, di-n-heptyl adipate and di-n-octyl adipate, di-n-butyl sebacate, mixed alkylaryl adipates such as benzyl decyl adipate, benzyl octyl adipate, benzyl hexyl adipate and benzyl butyl adipate, alkyl-aryl esters of aromatic di-, tri-, or tetra-carboxylic acids such as butyl benzyl phthalate (BBP), alkyl esters of aromatic mono-, di-, tri-, or tetra-carboxylic acids such di-iso octyl phthalate, phosphate esters such as 2-ethylhexyl diphenyl phosphate and ricinoleates such as butyl ricinoleate.

The polymer blend of the printed layer of the decorative surface covering according to the present invention comprises:
- from 30 to 90% by weight, preferably from 35 to 85% by weight, more preferably from 40 to 80% by weight of polylactic acid (i) or a mixture of polylactic acid and one or more vinyl alkanoate comprising polymer(s) (ii), or a mixture of polylactic acid and one or more (meth)acrylate comprising polymer(s) (iii), or a mixture of polylactic acid and one or more vinyl alkanoate comprising polymer(s) and one or more (meth)acrylate comprising polymer(s), wherein said mixtures comprise at least 5% by weight, preferably at least 10% by weight, more preferably at least 15% by weight, most preferably at least 20% by weight of polylactic acid;
- from 10 to 70% by weight, preferably from 15 to 65% by weight, more preferably from 20 to 60% by weight of polyvinyl butyral (iv) or a mixture of polyvinyl butyral and one or more vinyl alkanoate comprising polymer(s) (ii), or a mixture of polyvinyl butyral and one or more (meth)acrylate comprising polymer(s) (iii), or a mixture of polyvinyl butyral and one or more vinyl alkanoate comprising polymer(s) and one or more (meth)acrylate comprising polymer(s), wherein said mixtures comprise at least 5% by weight, preferably at least 10% by weight, more preferably at least 15% by weight, most preferably at least 20% by weight of polyvinyl butyral;
wherein the total amount of polymer in the polymer blend represents 100% by weight.

Besides the polymer blend, the composition of the printed layer according to the present invention further comprises ingredients such as plasticizers, preferably bioplasticizers, fillers and pigments and/or dyes and one or more additives, such as, modifying resins, stabilizer, foaming agents, tackifiers, dispersion agents, antistatic agents, thermal and light stabilizers, flame retardants, or any combination thereof.

Any plasticizer capable of plasticizing the composition of the present invention can be used. Suitable plasticizers are selected from the group consisting of dialkyl esters of cyclohexane dicarboxylic acids; dialkyl esters of aliphatic dicarboxylic acids; alkyl esters of aromatic mono- di-, tri-, or tetra-carboxylic acids; lower alkyl citrates; lower alkyl phosphates, alkyl sulfonates and other plasticizers used in conventional polyvinyl chloride applications.

Preferably the plasticizers comprise alkyl esters of polycarboxylic acids, more preferably alkyl esters of aromatic polycarboxylic acids.

Preferably the plasticizers comprise an epoxidized or otherwise derivatized vegetable oil, for example epoxidized soybean oil such as epoxidized C₁-C₁₀ alkyl soyate, epoxidized linseed oil, epoxidized soy oil, epoxidized tall oil and the like.

Preferably the plasticizer is an ecologically friendly citrate-based plasticizer that includes a blend of citrate and derivatized vegetable oil.

Preferably the plasticizer is an acetylated monoglyceride such as for example the acetylated monoglyceride of ricinoleic acid.

The plasticizer is typically present in an amount of up to 100 parts by weight, preferably from 2 to 100 parts by weight, more preferably from 3 to 70 parts by weight, most preferably from 4 to 55 parts by weight or even from 5 to 40 parts by weight, for 100 parts by weight of polymer blend.

The composition of the printed layer of the present invention further comprises one or more fillers in an amount comprised between 25 and 300 parts by weight, preferably between 50 and 250 parts by weight, more preferably between 75 and 200 parts by weight for 100 parts by weight of the polymer blend.

Examples of fillers suitable for the composition of the present invention can be any conventional filler, especially those types traditionally used in surface coverings.

The filler can be organic, inorganic, or a combination of both, such as with different morphologies. Examples include, but are not limited to, coal fly ash, carbonate salts such as magnesium carbonate, calcium carbonate and calcium-magnesium carbonate, barium sulfate, carbon black, metal oxides, inorganic material, natural material, alumina trihydrate, magnesium hydroxide, bauxite, talc, mica, dolomite, barite, kaolin, silica, post-consumer glass, or post-industrial glass, synthetic and natural fiber, or any combination thereof.

Preferably the filler comprises talc, mica, calcium carbonate, magnesium carbonate, dolomite, barite, bauxite, magnesium hydroxide, kaolin, silica, glass, or any combination thereof.

Examples of pigments and dyes suitable for the composition of the present invention are metallic oxides such as titanium dioxide, iron oxide, zinc oxide, magnesium oxides and the like, hydrotalcites, metal hydroxides, metal powders, sulphides, sulphates, carbonates, silicates, iron blues, organic reds, organic maroons and the like.

The composition of the printed layer of the present invention further comprises one or more antioxidants in an amount comprised between 0.01 to 3 parts by weight, preferably from 0.1 to 2 parts by weight, for 100 parts by weight of the polymer blend.

The antioxidant for being used in the decorative surface coverings of the present invention comprises one or more sterically hindered phenols or a mixture of one or more sterically hindered phenols and one or more phosphites.

The sterically hindered phenols, preferably used in the decorative surface coverings of the present invention are octadecyl-3-(3,5-di-t-butyl-4-hydroxyphenyl)propionate (Irganox^{®} 1076); pentaerythritoltetrakis[3-(3,5-di-t-butyl-4-hydroxyphenyl)propionate] (Irganox^{®} 1010) both supplied from BASF; and 4,4'-methylene-bis(2,6-di-t-butylphenol).

The phosphites preferably used in the decorative surface coverings of the present invention are trisnonylphenyl phosphite (Weston^{®} TNPP) supplied from Addivant™; tris (2,4-di-t-butylphenyl)phosphite (Irgafos^{®} 168) supplied from BASF, Ltd.; and bis(2,4-di-t-butylphenylpentaerythritol) diphosphate (Everfos^{®} -626) supplied from Everspring Chemical Co., Ltd.

Other stabilizers such as lead salts, organotin compounds, barium, cadmium and zinc salts, calcium/zinc stabilisers, for reducing degradation by heat, as well as benzotriazole and benzophenone compounds and hindred amine light stabilizers, for reducing degradation by sunlight, are optionally added in an amount of up to 3 parts by weight for 100 parts by weight of polymer blend.

The composition of the printed layer of the present invention further comprises one or more lubricants of the stearic acid type, the fatty acid ester type, the fatty acid amide type, the paraffin hydrocarbon type, the naphtenic hydrocarbon type, the metal soap type, the silicone type, polyethylene glycol type and waxes, used alone or as a mixture. Preferred lubricants comprise a mixture of stearic acid type and silicone type lubricants.

Preferred stearic acid type lubricants include stearic acid and metallic stearate.

Preferred silicone type lubricants include siloxane homopolymers or copolymers comprising dimethylsiloxane units, methylhydrogen siloxane units, diphenylsiloxane units, phenylmethylsiloxane units, dimethylhydrogen siloxane units and trimethylsiloxane units. A preferred silicone is polydimethylsiloxane.

The printed layer of the decorative surface coverings of the present invention may comprise lubricants in an amount up to 10 parts by weight, preferably in an amount comprised between 0.5 and 5 parts by weight, more preferably between 1.0 and 4.5 parts by weight, most preferably between 1.5 and 4 parts by weight for 100 parts of polymer blend.

Besides the printed layer, the decorative multi-layer surface coverings of the present invention comprise a backing layer, a core layer and a wear layer, each having a top surface and a bottom surface, wherein the top surface of the backing layer is affixed to the bottom surface of the core layer, wherein the top surface of the core layer is affixed to the bottom surface of the printed layer; wherein the top surface of the printed layer is affixed to the bottom layer of the wear layer and wherein the top surface of the wear layer is covered with a protecting top-coating.

Preferably at least one of the backing layer, the core layer and the wear layer comprises PVB and/or PLA.

The backing layer, the core layer and the wear layer further may comprise:
- one or more (meth)acrylate comprising polymer(s) selected from the group consisting of (meth)acrylate homo- or a random (co)polymers; (meth)acrylate block copolymers; alkene/alkyl (meth)acrylate copolymers; alkene/ alkyl(meth)acrylate/carbon monoxide copolymers;
- one or more vinyl alkanoate comprising polymers selected from the group consisting of vinyl alkanoate homo- or copolymers; alkene/vinyl alkanoate copolymers; alkene/vinyl alkanoate/carbon monoxide copolymers;
- one or more alkene homo- or copolymers;
- one or more polar group comprising polyolefins;
- one or more thermoplastic elastomers comprising sequences of one or more vinyl aromatic monomer(s) and sequences of one or more alkylene(s).

Preferably at least one of the backing layer, the core layer and the wear layer is polyvinyl chloride free.

The printed layer of the present invention further may comprise one or more prints on at least one surface of the polymer layer intended to constitute the final printed layer.

The print may be a decorative design. The decorative design may be natural designs and patterns such as a wood pattern or stone pattern. The decorative design may also be a fantasy design or pattern or a photograph.

The ink compositions for being used in the present invention are dryable and/or curable and are solvent containing, water based or solventless inks comprising one or more polymer(s) and/or oligomers selected from the group consisting of polyolefins, poly(meth)acrylics, polyesters, polyamides, polyvinyl chloride, latex, polycarbonates, polyurethanes, polyethers, alkyd resins and mixtures thereof; and one or more dyes and/or pigments.

By curable ink composition, the present invention means cross-linking under the influence of heat or under the influence of actinic radiation.

The print may be obtained from a conventional printing process, such as for example offset printing, flexography, rotogravure or a digital printing process, such as single-pass and multi-pass.

For the particular case of single-pass digital printing of water based inks the prior application of a primer, such as for example disclosed in US 2014/0144583, is advisable.

For the particular case of multi-pass digital printing, the use of radiation curable inks is advisable.

Standard inks for PVC application can be used.

The printing composition is preferably a vinyl plastisol and/or an acrylic plastisol ink which is applied to the polymer layer by means of a rotary screen/blade or roll coating device and subsequently gelled.

The printed layer of the present invention may be contacted and affixed to the wear layer and the core layer without being previously subjected to a printing application. For this particular case the printed layer of the present invention does not comprise a decorative print.

Preferably a top-coat formulation can be used on the top-surface of the wear layer, contacting the printed layer, can be selected from the standard polyurethane formulation conventionally used for coating polyvinyl chloride surface coverings.

Examples of said standard formulations are two-component solvent borne, waterborne or solvent-free polyurethane formulations, solvent borne air drying or moisture curable one component formulations and aqueous polyurethane dispersions, wherein drying and/or cross-linking is performed at room temperature or higher eventually in combination with forced air conditions.

The top-coat on the top-surface of the wear layer, contacting the printed layer, preferably is a polyurethane comprising top-coat obtained from cross-linking under influence of actinic irradiation, a radiation curable composition comprising (an) ethylenically unsaturated polyurethane polymer(s) and one or more ethylenically unsaturated oligomers and/or monomers, said oligomers and monomers comprising ester, ether and/or urethane group(s).

The radiation curable composition preferably comprises a radiation curable aqueous polyurethane dispersion.

The present invention provides a method for the preparation of the printed layer and of the decorative surface coverings comprising said printed layer.

In general the calendering process is used wherein a molten polymer blend is fed to a series of two or more heated rolls in such a way to produce a polymer layer of uniform thickness.

Besides PVB and/or PLA, the hot polymer blend for the preparation of the printed layer, comprises one or more (meth)acrylate comprising polymer(s) and/or one or more vinyl alkanoate comprising polymer(s), one or more plasticizer(s), preferably bioplasticizers, filler(s), pigment(s), stabilizer(s), and optionally one or more additives such as flame retardants and antistatic agents.

The hot polymer blend is prepared in a suitable heated mixer, for example in a twin screw or a single screw extruder, a mixing bowl with heated jacket, a Banbury mixer, continuous mixer, a ribbon mixer or any combination thereof at an internal temperature comprised between 140 and 240°C, preferable between 160 and 220°C, more preferable between 170 and 210°C to form a blend.

By internal temperature it is meant the real temperature of the paste and not the set temperatures of the equipment for preparing and processing of said paste.

The uniform hot mass then is discharged onto one or more processing machines, comprising a series of two or more heated rolls in order to produce a polymer layer of uniform thickness, in general comprised between 50 and 500 µm, preferably between 70 and 250 µm.

The set temperature of the calendering rolls is comprised between 80 and 200°C, preferably between 100 and 190°C, more preferably between 120 and 180°C.

The printed layer is provided with one or more prints. The one or more prints may be provided either on the top-surface or on the bottom surface of the polymer layer.

Otherwise one or more prints may be provided on both surfaces of said layer.

Printing is performed at a temperature comprised between 25 and 60°C, preferably between 30°C and 50°C.

The step of drying- and/or curing the pigment ink composition comprises applying heat and/or actinic radiation to the ink composition.

Heat may be applied in form of for instance medium and/or short infrared irradiation and/or heated air.

Actinic radiation may be applied by exposure to actinic radiation such as ultraviolet (UV) radiation with a wavelength of for instance 250-600 nm obtained from for example medium and high-pressure mercury vapour lamps, lasers, pulsed lamps (flashlight), halogen lamps, excimer emitters, LED lamps.

On the other hand actinic irradiation comprises bombardment with high-energy electron beams (EB) at for instance 150-300 keV.

Preferably a plastisol ink is applied using rotary screen/roller squeegee techniques, whereupon the print is fused at a temperature comprised between 100 and 220°C.

The backing layer, core layer and wear layer are prepared from melt mixing and melt calendering the corresponding polymer blend, plasticizer(s) and optional pigments, fillers and additives.

The backing layer, core layer, printed layer and the wear layer are contacted and affixed in a subsequent calendering step.

Calendering is performed at:
- a temperature comprised between 80 and 200°C, preferably between 100 and 190°C, more preferably between 120 and 180°C;
- a speed comprised between 2 and 100 m/min, preferably between 10 and 50 m/min, more preferably between 10 and 20 m/min.

A protecting top coating is preferably applied on the top surface of the wear layer. The protective top-coating preferably is cross-linked, more preferably is cross-linked by actinic irradiation.

A radiation curable composition, preferably a radiation curable aqueous polyurethane dispersion is homogeneously applied on the top surface of the decorative substrate standing at a temperature comprised between 25 and 60°C, preferably between 30°C and 50°C.

The radiation curable compositions may be applied by any suitable coating process known to those of ordinary skill in the art, for example by direct gravure coating, reverse gravure coating, offset gravure coating, smooth roll coating, curtain coating, spray coating and combinations thereof. Direct gravure coating and smooth roll coating are preferred.

For the preferred embodiment wherein an aqueous radiation curable polyurethane dispersion is used, water is evaporated preferably in a convection oven at a temperature of about 100°C.

The decorative substrate, comprising the polyurethane top-layer, optionally is heated to a temperature comprised between 100 and 200°C, and subsequently is mechanically embossed before cross-linking.

For the particular case where the radiation curable composition is not water based, such as for example a 100% solids or a near 100% solids composition, said composition preferable is applied to the decorative substrate and cross-linked after the embossing step.

Mechanical embossing is performed by pressing a texture into the decorative surface covering comprising the polyurethane layer atop. Embossing is carried out at a pressure comprised between 10 and 25 kg.cm⁻² and surface temperature comprised between 100°C and 200°C, preferably between 130°C and 200°C.

The apparatus for mechanically embossing a substrate in general includes a cooled embossing roller and a backup roller operatively positioned within the embossing roller such that a nip is formed between the backup roller and the embossing roller whereby the substrate may pass through the nip and engage the embossing roller for imparting a mechanically embossed pattern. The apparatus further includes a profilometer capable of quantifying the mechanically embossed pattern as the substrate is being embossed.

In general the texture obtained from mechanical embossing is characterized by a depth comprised between about 10 to 100 µm, a width comprised between about 125 to 400 µm, a wall angle (angle relative to surface) comprised between about 5 to 40 degrees and a frequency of about 4 to 20 features per cm.

The embossed decorative substrate, comprising the uncured polyurethane coating, subsequently is cooled down to a temperature comprised between 30 and 70°C, preferably between 30 and 60°C and subjected to actinic radiation to form the decorative substrate covering.

Actinic radiation may be applied by exposure to actinic radiation such as ultraviolet (UV) radiation with a wavelength of for instance 250-600 nm obtained from for example medium and high-pressure mercury vapour lamps, lasers, pulsed lamps (flashlight), halogen lamps, excimer emitters, LED lamps.

On the other hand actinic irradiation comprises bombardment with high-energy electron beams (EB) at for instance 150-300 keV.

It has been observed that the bonding strength between the core and the printed layer on the one hand, and between the printed and the wear layer on the other hand is comparable to the bonding strength between two or more layers of the current polyvinyl chloride surface coverings.

Bonding between the layers of the present invention, is characterized by a peel strength, according to ISO 24345:12 (Resilient floor coverings - determination of peel resistance) in excess of 50N/5cm.

### Examples

The following illustrative examples are merely meant to exemplify the present invention and are not destined to limit or otherwise define the scope of the present invention.

Table 1 illustrates the composition and the adhesion performances of printed layers according to the invention (Examples 1 to 10) along with comparative examples 11 to 13

**Tabel 1**

| | **Examples** | | | | | | | | | | **Comp. Examples** | | |
|---|---|---|---|---|---|---|---|---|---|---|---|---|---|
| Constituent | **1** | **2** | **3** | **4** | **5** | **6** | **7** | **8** | **9** | **10** | **11** | **12** | **13** |
| Polyvinyl Butyral | 10 | 10 | 10 | 30 | 10 | 30 | 15 | 15 | 20 | 65 | | 90 | 80 |
| Polylactic acid | 40 | 40 | 40 | 20 | 20 | 30 | 35 | 35 | 30 | 35 | 90 | | 20 |
| (Meth)acrylate | 50 | 50 | 50 | 20 | 30 | 20 | 50 | 50 | 50 | | 5 | 5 | |
| Vinyl alkanoate | | | | 30 | 40 | 20 | | | | | 5 | 5 | |
| Plasticizer | 10 | 25 | 55 | 10 | 15 | 25 | 25 | 25 | 25 | 25 | 10 | 10 | 10 |
| Filler | 25 | 100 | 200 | 100 | 150 | 250 | 100 | 150 | 150 | 150 | 100 | 100 | 100 |
| Adhesion with Wear Layer (peel strength, according to ISO 24345:12) | | | | | | | | | | | | | |
| > 60 N/50 mm | X | X | X | X | X | X | X | X | X | | X | | |
| 50-60 N/50 mm | | | | | | | | | | X | | | |
| 40-50 N/50 mm | | | | | | | | | | | | | |
| < 40 N/50 mm | | | | | | | | | | | | X | X |
| Adhesion with Core Layer (peel strength, according to ISO 24345:12) | | | | | | | | | | | | | |
| > 60 N/50 mm | | | | X | X | X | | | X | X | | X | X |
| 50-60 N/50 mm | X | X | X | | | | X | X | | | | | |
| 40-50 N/50 mm | | | | | | | | | | | | | |
| < 40 N/50 mm | | | | | | | | | | | X | | |

In tabel 1 the sum of the thermoplastic polymers of the polymer blend equals 100 parts.

The amount of plasticizer is expressed in parts for 100 parts of polymer blend. The amount of filler is expressed in parts for 100 parts of polymer blend.

Examples 1 to 10 are according to the invention; examples 11 to 13 are comparative.

All examples and comparative examples comprise 0.3 parts of antioxidant for 100 parts of polymer blend. The antioxidant is Irganox 1010, Irganox 1076 or a 1/1 mixture of both.

All examples and comparative examples comprise 1.0 parts of a stearic type lubricant (Radiacid® 444 from Olean); except example 1, comprising 0.5 parts; example 2 comprising, 0 parts; and example 3 comprising 2 parts of Radiacid® 444.

Polylactic acid is Ingeo™ from NatureWorks (4043D or 4060D).

The (meth)acrylate comprising polymer ((meth)acrylate homo- or a random (co)polymer) is Kane ACE®PA-210 or Kane ACE®PA-211 from Kaneka for examples 1, 2, 3, 4, 6, 7, 8, 9, and comparative examples 11, 12 and 13, and a 1/1 mixture of Kane ACE®-210 and PA 910 from LG Chemicals (polymethyl methacrylate) for example 5.

The vinyl alkanoate comprising polymer in example 4 and 6 is Levapren® 900 from Lanxess (alkene/vinyl alkanoate copolymer).

The vinyl alkanoate comprising polymer in example 5 is a 3/1 mixture of Levapren® 900 and Vinnex® 2510 from Wacker (vinyl alkanoate polymer comprising at least 60% by weight of vinyl acetate).

The plasticizers introduced in the polymer blends are Grinsted® Soft-N-Safe from Danisco (acetylated monoglycerides) for examples 1, 2 and 3; Citrofol® All from Jungbunzlauer (C₁-C₈ alkyl acetylcitrate) for example 4; a 1/1 mixture of Citrofol® BII from Jungbunzlauer (C₁-C₈ alkyl acetylcitrate) and Eastman™ TOTM plasticizer from Eastman (trialkyl ester of aromatic tricarboxylic acid) for example 5; a 1/1 mixture of Citrofol® All and Eastman™ TOTM plasticizer for example 6; a 3/1 mixture of Grinsted® Soft-N-Safe and Disflamoll® DPO from Lanxess (lower alkyl-aryl phosphates) for example 7; a 1/1 mixture of Plastimoll® DOA from BASF dialkyl ester of aromatic dicarboxylic acid) and Drapex® 3.2 from Galata Chemical (epoxidized vegetable oil) for example 8; Drapex® 3.2 for example 9; and a 1/1 mixture of Plastimoll® DOA and Drapex® 6.8 from Galata Chemical (epoxidized vegetable oil) for example 10.

A polymer layer of 0.25 mm thickness was prepared through melt-mixing in an extruder at a temperature of 170°C and calendering in a roller mill at a temperature of 170°C.

A wear layer (of 0.5 mm) comprising a polymer blend comprising from 20 to 80% by weight of polylactic acid and from 80 to 20% by weight of one or more acrylate polymer(s) and a core layer (of 1.25 mm) comprising a polymer blend comprising from 20 to 95% by weight of polyvinyl butyral and from 5 to 80% by weight of polylactic acid, optionally in a mixture with one or more alkyl (meth)acrylate comprising (co)polymer(s) and/or one or more vinyl alkanoate copolymers, were bonded to the top-surface and the bottom surface of the printed layer respectively in a hot/cold-pressing step at 160°C at approximately 4 bar pressure, followed by cooling down to 25 °C.

A peel strength, according to ISO 24345:12 above 50N/5cm has been measured for examples 1 to 10 for both printed layer/wear layer and printed layer/core layer, the printed layer not comprising a print.

On the contrary, polymer blends not according to the present invention (examples 11 to 13) proved a satisfactory peel strength (> 50 N/50 mm) either to the wear layer or to the core layer, but never to both said layers.

For the printed layer, according to the present invention, comprising a print on its top-surface, comparable values for peel strength were obtained (> 50 N/50 mm).

The polymer layer of the printed layer was printed by means of a single pass digital printer with a water based ink. The print was dried during 3 seconds at 80°C in an air ventilated oven. The printed image is fixated evenly over the surface of the polymer layer of the printed layer and a print result with good colour strength and resolution was achieved.

## Claims

1. Decorative multi-layer surface covering comprising a printed layer, said printed layer comprising a polymer blend, said polymer blend comprising:
- from 30 to 90% by weight, preferably from 35 to 85% by weight, more preferably from 40 to 80% by weight of polylactic acid (i) or a mixture of polylactic acid and one or more vinyl alkanoate comprising polymer(s) (ii), or a mixture of polylactic acid and one or more (meth)acrylate comprising polymer(s) (iii), or a mixture of polylactic acid and one or more vinyl alkanoate comprising polymer(s) and one or more (meth)acrylate comprising polymer(s), wherein said mixtures comprise at least 5% by weight of polylactic acid;
- from 10 to 70% by weight, preferably from 15 to 65% by weight, more preferably from 20 to 60% by weight of polyvinyl butyral (iv) or a mixture of polyvinyl butyral and one or more vinyl alkanoate comprising polymer(s) (ii), or a mixture of polyvinyl butyral and one or more (meth)acrylate comprising polymer(s) (iii), or a mixture of polyvinyl butyral and one or more vinyl alkanoate comprising polymer(s) and one or more (meth)acrylate comprising polymer(s), wherein said mixtures comprise at least 5% by weight of polyvinyl butyral;
wherein the total amount of polymer in the polymer blend represents 100% by weight.

2. The decorative multi-layer surface covering according to claim 1, wherein polyvinyl butyral (iv) is recycled polyvinyl butyral.

3. The decorative multi-layer surface covering according to claim 1 or 2, wherein polyvinyl butyral (iv) is recycled polyvinyl butyral comprising from about 5 to about 50% by weight, of one or more plasticizers selected from the group consisting of alkyl esters of polyethylene glycol, dialkyl esters of aliphatic dicarboxylic acid, alkyl-aryl of aliphatic dicarboxylic acids, alkyl esters of aromatic mono-, di-, tri-, or tetra-carboxylic acids, alkyl-aryl esters of aromatic di-, tri-, or tetra-carboxylic acids, phosphate esters and ricinoleates.

4. The decorative multi-layer surface covering according to any of claims 1 to 3 wherein the one or more vinyl alkanoate comprising polymers (ii) are selected from the group consisting of:
- (ii.a) the vinyl alkanoate homo- or copolymers comprising 60% by weight or more, preferably 70% or more, more preferably 80% or more, most preferably 90% or more of vinyl acetate;
- (ii.b) the alkene/vinyl alkanoate copolymers comprising 60% by weight or more, preferably 70% or more, more preferably 80% or more, most preferably 85% or more of vinyl alkanoate;
- (ii.c) the alkene/vinyl alkanoate/carbon monoxide copolymer comprising 40 to 80% by weight of one or more alkenes, 5 to 60% by weight of one or more vinyl alkanoates and 3 to 30% by weight of carbon monoxide; and
- mixtures of (ii.a), (ii.b) and (ii.c).

5. The decorative multi-layer surface covering according to any of claims 1 to 4, wherein the one or more (meth)acrylate comprising polymer(s) (iii) are selected from the group of:
- (iii.a) the (meth)acrylate homo- or a random (co)polymer comprising at least 60% by weight, preferably at least 70% by weight, more preferably at least 80 % by weight of methyl (meth)acrylate;
- (iii.b) the (meth)acrylate copolymer is a block copolymer comprising one or more blocks of methacrylic ester units and one or more blocks of acrylic ester units;
- (iii.c) the alkene/(meth)acrylate copolymer comprising from 50 to 95% by weight of one or more alkenes and from 5 to 50% by weight of one or more C₁-C₈ alkyl (meth)acrylates;
- (iii.d) alkene/ alkyl(meth)acrylate/ carbon monoxide copolymers comprising from 40 to 80% by weight of one or more alkenes and from 5 to 60% by weight of one or more C₁-C₈ alkyl (meth)acrylates and 3 to 30% by weight of carbon monoxide; and
- mixtures of(iii.a), (iii.b), (iii.c) and (iii.d).

6. The decorative surface covering according to any of claims 1 to 5 comprising from 2 to 100 parts by weight, preferably from 3 to 70 parts by weight, more preferably from 4 to 55 parts by weight and most preferably from 5 to 40 part by weight of one or more plasticizers selected from the group consisting of dialkyl esters of cyclohexane dicarboxylic acids; dialkyl esters of aliphatic dicarboxylic acids; alkyl esters of aromatic mono- di-, tri-, or tetra-carboxylic acids; lower alkyl phosphates; lower alkyl-aryl phosphates; alkyl sulfonates and bioplasticizers for 100 parts by weight of polymer blend comprising polymers (i), (ii).

7. The decorative surface covering according to any of claims 1 to 6, wherein the printed layer comprises one or more bioplasticizers selected from the group consisting of acetylated monoglycerides, C₁-C₈ alkyl citrate, C₁-C₈ alkyl acetylcitrate and epoxidized vegetable oils.

8. The decorative multi-layer surface covering according to any of claims 1 to 7, wherein the printed layer is polyvinyl chloride free.

9. The decorative surface covering according to any of claims 1 to 7, comprising:
- a backing layer in contact with the bottom surface of a core layer,
- a printed layer in contact with the top surface of the core layer,
- a wear layer in contact with the top surface of the printed layer,
wherein at least one of said backing-, core- and wear layer comprises polylactic acid and/or polyvinyl butyral and/or (meth)acrylate comprising polymer(s) and/or vinyl alkanoate comprising polymer(s).

10. The decorative multi-layer surface covering according to any of claims 1 to 9, wherein at least one of the backing layer, the core layer and the wear layer is polyvinyl chloride free.

11. The decorative multi-layer surface covering according any of claims 1 to 10, comprising a print on at least on side of the polymer layer of the printed layer, said print comprising one or more polymer(s) and/or oligomers selected from the group consisting of polyolefins, poly(meth)acrylics, polyesters, polyamides, polyvinyl chloride, latex, polycarbonates, polyurethanes, polyethers, alkyd resins and mixtures thereof; and one or more dyes and/or pigments.

12. Method for the preparation of decorative multi-layer surface covering according to claims 1 to 11 comprising the steps of:
a) melt-mixing the printed layer constituents at a temperature comprised between 140 and 240°C to form a paste;
b) converting the paste of step a) into the printed layer using a calendering process at a temperature comprised between 80 and 200°C;
c) contacting and affixing each side of the printed layer of step b) with a paste, wherein said paste comprises polylactic acid and/or polyvinyl butyral, said contacting and affixing being performed through a calendering process, at a temperature comprised between 130 and 220°C, to form a decorative multi-layer stack.

13. The method according to claim 13 wherein the polyvinyl butyral is at least partly obtained from a recycling process.

14. The method according to claim 12 or 13 comprising the additional step of:
- cooling down the printed layer of step b) to a temperature comprised between 25 and 60°C, preferably between 30°C and 50°C; and
- applying at least one print on at least one surface of said printed layer.

15. The method according to claim 12 or 13 comprising the additional step of:
- cooling down the printed layer of step b) to a temperature comprised between 25 and 60°C, preferably between 30°C and 50°C;
- applying a primer on at least one surface of said printed layer; and
- applying at least one print on the at least one primered surface of said printed layer.

16. The method according to any of claims 12 to 15, wherein the at least one print is obtained from drying and/or curing an ink composition selected from the group consisting of aqueous ink compositions, radiation curable ink compositions, radiation curable aqueous ink compositions, PVC plastisols and poly(meth)acrylate plastisols.
